# EUROPEAN PATENT SPECIFICATION

(11) **EP 1 851 981 B1**
(45) Date of publication and mention of the grant of the patent: **10.04.2013**
(21) Application number: 06736279.8
(22) Date of filing: 27.02.2006
(51) Int. Cl.: H04W 12/12, H04L 29/06, H04W 12/06, H04W 40/00, H04W 84/12, H04W 84/18, H04W 64/00

(54) **LOCATION-BASED ENHANCEMENTS FOR WIRELESS INTRUSION DETECTION**
STANDORTBASIERTE VERBESSERUNGEN FÜR DRAHTLOSE EINDRINGDETEKTION
AMELIORATIONS BASEES SUR L'EMPLACEMENT DE DETECTION D'UNE INTRUSION SANS FIL

(30) Priority: 25.02.2005 US 66009
(43) Date of publication of application: 07.11.2007
(73) Proprietor: Cisco Technology, Inc., San Jose, CA 95134-1706 (US)
(72) Inventor: WINGET, Nancy, Cam, Mountain View, California 94040 (US); KRISCHER, Mark, Pymble, NSW 2073 (AU); OLSON, Timothy, S., San Jose, California 95130 (US); YANG, Sheausong, Saratoga, California 95070 (US)
(74) Representative: Kazi, Ilya
(86) International application number: PCT/US2006/006923
(87) International publication number: WO 2006/091944

(56) References cited:
- WO-A1-2005/018162
- US-A1- 2004 023 640
- US-A1- 2004 137 915
- US-A1- 2004 190 718
- US-A1- 2004 218 602
- US-B1- 6 754 488

## Description

### FIELD OF THE INVENTION

The present invention relates broadly to configuration of wireless local area networks. Specifically, the present invention relates to configuring a wireless local area network of client devices. More specifically, the present invention relates to using management frames in a wireless transmission medium to detect unauthorized access to a wireless local area network.

### BACKGROUND

Use of wireless networks such as wireless local area networks (WLANs) is becoming widespread. With the proliferation of WLANs, network security is also becoming more and more important. WLANs present important network security concerns.

A WLAN may be ad hoc, in that any client device (referred to herein as a client) may communicate directly with any other client, or have an infrastructure in which a client can only communicate with another client via an access point device (AP). Problems specific to WLANs arise from wireless clients requesting access to the various APs. Often in a deployment of a WLAN environment, AP cells' coverages are overlapped to achieve maximum RF coverage to reduce non-service spots. Wireless clients can move between APs, and thus change the RF environment of the WLAN depending on their location. Additionally, WLANs are often required to grow with increased demand as more and more clients require service from the WLAN. Expanding the WLAN requires reconfiguring equipment, adding APs, and placing APs in locations that do not conflict with other APs or otherwise complicate managing the WLAN.

Because wireless is an open medium, anyone can contend for access and send frames over a channel. As 802.11 management frames are sent without any protection, an attacker can easily spoof as a legitimate AP, sending directives to clients as if it were the AP serving the clients. For example, nearly all attacks begin with an attacker spoofing as an AP by sending disassociation or deauthentication requests to a client.

WO 2005/018162 discloses a a method to detect a rogue access point of a wireless network. The method includes maintaining an AP database that includes information about managed access point (APs) and friendly APs, including the MAC address of each managed AP. The method further includes sending a scan request to one or more managed APs, including one or more of a request for the receiving managed AP to scan for beacons and probe responses and a request for the receiving managed AP to request its clients to' scan for beacons and probe responses. The method further includes receiving reports from at least one of the receiving managed APs, a report including information on any beacon or probe response received that was sent by an AP. For each beacon or probe response on which information is received, the method analyzes the information received in the report about the AP that sent the beacon or probe response, the analyzing including ascertaining if the MAC address of the AP that sent the beacon or probe response matches a MAC address of an AP in the AP database to ascertain whether or not the AP is a potential rogue AP or a managed or friendly AP. US Patent No. 6,754,488 discloses a method for ascertaining the location of an access point in a wireless network. Initially, a strength of a radio frequency signal of an access point of a wireless network is monitored at a position utilizing a wireless network analyzer. Next, the wireless network analyzer is moved about the position. The foregoing operations may be repeated to allow the location of the access point to be ascertained based on the monitored strength of the radio frequency signal. US 2004/023640 discloses a method for detecting an unauthorized access point accessing a communication network. An authorized access point and/or an authorized mobile unit detects a beacon generated by a transmitting access point. The beacon includes identification information of the transmitting access point. A computing arrangement verifies the identification information of the transmitting access point with a preexisting database of the communication network. The preexisting database includes data corresponding to identification information of a plurality of authorized access points. The computing arrangement initiates a tracking procedure to determine a location of the unauthorized access point where the verification of the transmitting access point identification information with the preexisting database fails. US 2004/190718 discloses a method for location based wireless client authentication, which includes the receipt of an authentication/access request from a wireless client desiring access to a wireless network. Once the request is received, a spatial location of the client is identified. Once the physical location of the client is identified, compliance with the authentication/access request is performed according to the identified spatial location of the device.

Thus, there is a heartfelt need for methods and equipment to efficiently protect a WLAN and provide WLAN managers with information needed to make management and access control decisions.

### SUMMARY

The present invention addresses the problems described above and protects WLANs by verifying that management frames purporting to be from a specific AP originate from near a physical location where the specific AP is known to be located according to the method of claim 1 and the wireless local area network managament device of claim 12. Thus, the present invention requires attackers to be located in close proximity to the AP they wish to spoof, allowing the AP to detect the spoofed frame and alert a WLAN administrator.

In an embodiment, the WLAN administrator deploys a new WLAN as described below. After installing hardware, the APs establish trusted relationships with the campus context manager (CCM). Radio parameters are auto-configured based on AP Radio discovery measurements. If necessary, client walkabouts are performed to gather signal strength measurements, and radio parameters can be re-configured using these measurements. In an embodiment, when a network is first installed, the WLAN administrator positions APs based on heuristic guidance and applies power without any time coordination. Optionally, the WLAN administrator may perform a site survey to optimize the AP placement. Site surveys can range from a quick coverage check using a client utility to detailed signal strength measurements using a third-party tool. After placement and power-up, each AP scans a frequency band to find a usable channel. In an embodiment, the Radio Manager generates a network-wide radio configuration overriding these initial settings. The WLAN administrator initiates radio discovery, auto-configuration and client walkabout measurements at the WLAN Network Manager (WNM) interface. AP Radio discovery involves APs broadcasting beacon signals and simultaneously listening for beacon signals from neighboring APs. The resulting measurements between APs are used to generate an initial radio configuration for the WLAN. Client walkabout measurements are not accompanied by location information, but sets of measurements correspond to specific locations in the WLAN coverage area. The Radio Manager uses these measurement sets to create measurement objects that contain data representing path losses to the strongest controlled APs and received signal strengths from uncontrolled sources at specific locations. A new radio configuration can be generated for the WLAN, using the additional information from the client walkabouts.

Depending on the embodiment of the present invention, the physical location of the APs can be either manually configured or achieved during the discovery or walkabout survey. During normal operation, the locations of the APs do not change as APs in general are not expected to be mobile devices. However, in the event that mobile APs are present, resurveying or manually reconfiguring the WLAN can be performed on a periodic basis. Once an AP's location is determined by physical coordinate location and/or through its relative set of neighbors, the AP's location is not expected to change.

A signature is conveyed for each management frame the AP transmits and is used for checking that management frames that purport to be from a specific AP actually originate from the expected location. Because the signature is unique to each frame, the dynamic nature of the stored signal strength information ensures a reasonably accurate representation of AP placement within the WLAN. As each AP sends management frames that contain a signal strength indication, this signal strength indication is compared to the AP's signal strength recorded in the radio manager's database. If a significant difference between the signal strength indicator of the management frame and the signal strength recorded in the radio manager's database indicates the possibility of an unauthorized user trying to spoof as a legitimate AP. In an embodiment, the actual validation is based on checking the message integrity code (MIC) of each management frame coupled with the signal strength of the AP by the detector to assert whether both the MIC is valid and whether that detector should have been able to detect that AP.

Many other features and advantages of the present invention will be realized by one skilled in the art upon reading the following detailed description when considered with the accompanying drawings, in which:

### BRIEF DESCRIPTION OF THE DRAWINGS

FIGS. 1A and 1B illustrate placement of APs in a WLAN and measurements taken during radio discovery.
FIG. 2 illustrates a network configuration in which radio measurements are introduced by embodiments of the present invention.
FIG. 3 illustrates an exemplary access point device containing measurement modules used in accordance with embodiments of the present invention.
FIG. 4 illustrates an exemplary access radio manager device used in accordance with embodiments of the present invention

### DETAILED DESCRIPTION

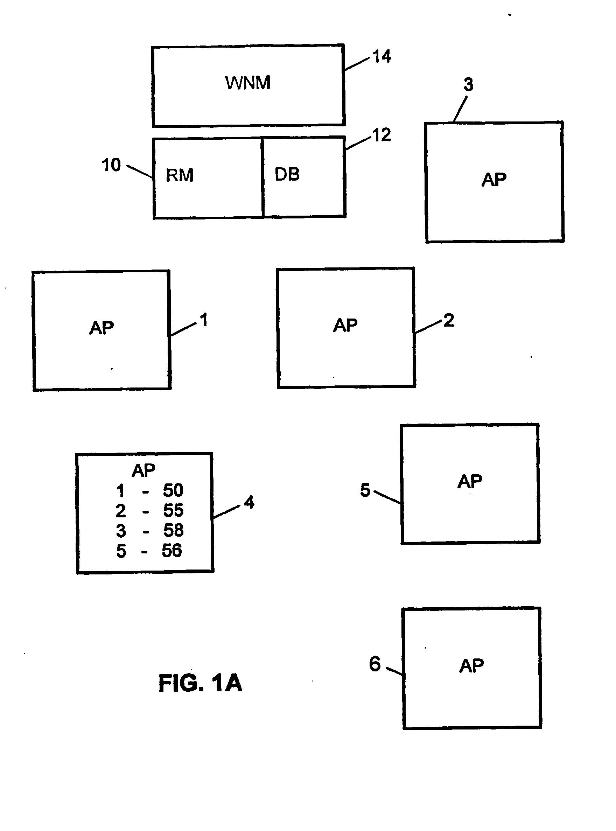

The WLAN administrator initiates AP radio discovery at deployment and schedules AP radio discovery during brief maintenance periods when the WLAN is not in use (e.g., 2:00AM each morning). The result of AP radio discovery is a snapshot of the RF interference at each AP and a set of signal strength measurements indicating the strength level at which each AP receives each neighboring AP's signal. Directing attention to FIG. 1A, a WLAN configuration having AP 1, AP 2, AP 3, AP 4, AP 5 and AP 6 and radio manager 10 and wireless network manager (WNM) 14 are shown. When the APs perform radio scans in accordance with the present invention is performed, APs are determined not in terms of physical location, but mapped in terms of signal strength received from each AP's neighboring APs. In other words, each AP is described in terms of what other APs the AP can detect, in terms of signal strength. For example, in accordance with the present invention, AP 4 is defined as AP 1 (50); AP 2 (55); AP 3 (58); AP 5 (56). In this example, AP 6 is not detected by AP 4, and thus is not included in the definition of AP 4. The values defining AP 4 are stored in a database maintained by radio manager 10. Radio manager 10 uses each AP's current transmission signal strength level to compute the path loss between each AP that the APs can detect. The computed path loss is saved in a database to characterize the RF environment, such as potential coverage redundancy in a set of 802.11 stations associated with a single AP (referred to herein as BSS), and overlap on the downlink. When the neighboring AP is not controlled, radio manager 10 saves the received signal strength. Radio manager 10 sets all controlled APs to transmit at their highest power level and then steps down through subsequent levels to characterize each AP's true power steps. AP Radio discovery is accomplished in the following event sequence. Radio manager 10 commands all APs to scan passively for RF energy over a predetermined time interval and return the results. This action is performed to detect uncontrolled 802.11 WLAN stations and interferers. Radio manager 10 uses the AP scan results to choose one test frequency for all APs in a particular region. Radio manager 10 sets all APs in a particular region to transmit beacons on the selected frequency at maximum transmit power. Each AP is assigned a unique beacon interval to minimize collisions. Radio manager 10 then commands each AP to report beacons that it receives from other APs along with accompanying signal strengths. This action is repeated with APs transmitting at each successively lower power level until reaching the lowest setting.

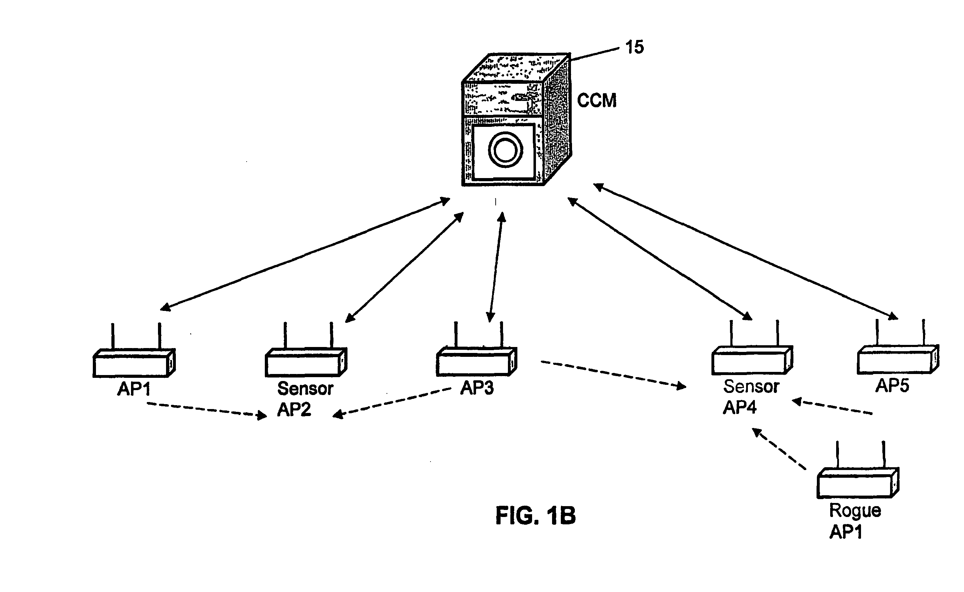

Directing attention to FIG. 1B, campus context manager (CCM) 15 can be utilized in a similar capacity as radio manager 10, database 12 and WNM 14. In an embodiment, CCM 15 stores the database of location information for each AP. This information can be manually configured or obtained through walkabouts based on signal strengths. As shown in FIG. 1B, AP 2's detected neighbors are AP 1 and AP 3. Similarly, AP 4's detected neighbors are only AP 3 and AP 5. In this embodiment, AP 2 and AP 4 are used to detect and validate all traffic they are able to receive. So if AP 4 receives frames that are from AP 1, then it is suspected to be a spoofed frame and AP 4 can report AP 1 to CCM 15 (or radio manager 10) as a potential rogue AP.

In an embodiment, a trust relationship is established between CCM 15 and all APs. APs issue their unique key used to protect their respective management frames. The management frame is protected, for example, by using a keyed one-way hash function such as HMAC-SHA1 and its resulting value, which serves as a message integrity code (MIC) that is also sent in the management frame. Sensor APs, such as AP2 and AP4 can validate these management frames as they receive them to also ensure that its neighboring APs are not under attack. In an embodiment, if AP 4 receives frames that are from AP 1 it can also validate that received frame using AP 1's key. Since APs may be moved occasionally, or some APs can even be mobile, the combination of location tracking and validation of the MIC provides for a better determination if a rogue is encountered.

The information stored in radio manager 10's database is also useful for checking that management frames that purport to be from a specific AP actually originate from the expected location. Because radio manager 10's database is updated periodically, the dynamic nature of the stored signal strength information associated with individual APs ensures a reasonably accurate representation of AP placement within the WLAN. As each AP sends management frames that contain a signal strength indication as well as the message integrity check (MIC), this signal strength indication is compared to the AP's signal strength recorded in radio manager 10's database. If a difference between the signal strength indicator of the management frame and the signal strength recorded in radio manager 10's database is outside of a threshold amount, this difference indicates the possibility of an unauthorized user trying to spoof as a legitimate AP. In such cases, a warning can be sent to the WLAN administrator to alert the administrator to the possibility of an attack on the WLAN.

In an embodiment, radio manager 10 uses the measured signal strength to calculate path loss information from AP to AP and from client location to AP. With this calculated path loss information and the configured power and channel settings of each AP, neighboring APs suffering from black holes are identified.

After AP Radio discovery and initial radio configuration, the WLAN administrator may initiate one or more client walkabouts. In a walkabout, a person walks around a coverage area while holding a client device, so that measurements can be gathered and all detected APs reported. The gathered information is used to characterize the RF environment of the WLAN, such as potential BSS coverage redundancy and overlap on the downlink. At the WNM user interface, the administrator specifies the media access control (MAC) addresses of clients from which the controlled APs will request frequent measurements, typically at five-second intervals. The WLAN administrator may select a walkabout with APs transmitting at maximum power or at the levels used during normal operation. During the walkabout, the WLAN administrator is not required to remain in a particular location for any length of time. Client measurements are taken quickly enough to allow the WLAN administrator to continue walking throughout the desired coverage area. Radio manager 10 makes requests to the client device 20 through the AP that is currently serving client 20, instructing client 20 to make a particular measurement. Typically, client 20 is requested to measure the signal strength of all beacon signals it can detect at any given spot at one point in time, and return the recorded signal strength indicator (RSSI) values of the received beacon signals. Where client 20 loses association from all APs, the WLAN administrator records the location. As the WLAN administrator walks the coverage area, the serving AP changes as its client moves from one BSS to another. As long as client 20 remains inside the coverage area, the serving AP continuously commands client 20 to measure and report the signal strength and background RF energy it receives from neighboring APs. All measurements are passed to radio manager 10, which incorporates them into its RF environment database 12. Database 12 provides data used to compute the next radio configuration. By performing radio discovery and client walkabout as described above, radio manager 10 is able to visualize the radio environment of the WLAN.

In an embodiment, the WLAN administrator can also walk through the coverage area using an 802.11 sniffer, such as available from Kismet Wireless, Inc., to locate the APs that can be seen at signal strengths sufficient to cause black hole problems among neighboring APS. Regardless of how black holes are detected among neighboring APS, either through transmitting beacon signals at stepped intervals or using an 802.11 sniffer during the walkabout, once black holes are detected, the APs suffering this problem are adjusted by radio manager 10 instructing each AP to change its beacon signal interval so that it is staggered with respect to the neighboring AP also suffering the black hole problem. The process of black hole detection can be an iterative process, performed after each occurrence of a black hole is corrected. This ensures that whatever beacon interval an AP selects to correct the detected black hole problem does not create a new black hole with a different, neighboring AP. In the preferred embodiment, skewing the beacon signals by one or two milliseconds with respect to the neighboring AP in the black hole is sufficient to prevent any extended period of time during which a black hole can occur.

During normal operation, radio manager 10 gathers RF statistics and identifies specific signal sources. This allows radio manager 10 to monitor the RF environment, and indicate when new APs appear, and roughly locate clients. Radio manager 10 may request measurements from APs and clients to monitor the WLAN RF environment. These measurements occur less frequently than during the walkabout, typically one or more minutes apart. Radio manager 10 typically asks only the clients to measure non-serving channels, allowing APs to remain on their serving channels to better serve their respective BSSs.

Each radio configuration includes parameters of AP channel, AP transmit power, BSS data rates, and BSS power limit. In computing a new radio configuration, radio manager 10 may be given free reign to select various combinations of parameters, or it may be limited to particular range of values for some or all of these parameters on some or all APs. After computing a new radio configuration, radio manager 10 quantifies the expected system performance and then waits for direction from WNM 14, which may request another configuration using a new set of constraints or may apply the computed radio parameters to the WLAN.

After the WLAN is deployed, radio manager 10 continuously collects measurements and monitors the RF state of the WLAN. Radio manager 10 alerts WNM 14 to changes that may require radio reconfiguration, but waits for further direction from WNM 14 before computing a new radio configuration and again before applying new radio parameters to the WLAN. Every action by radio manager 10 is made in response to a command received from WNM 14. This makes WNM 14 responsible for managing the degree of reconfiguration autonomy granted to the entire system by the WLAN administrator. The WAN administrator uses the WNM interface to specify the conditions, if any, under which radio parameters may be automatically changed. All other conditions require explicit approval at each instance.

In a preferred embodiment, nightly measurements are performed automatically to check the RF state of the WLAN. These measurements are typically scheduled in a WNM job that runs AP Radio discovery early each morning, perhaps at 2:00 AM. During this brief maintenance time, which could last about a minute, the WLAN becomes unavailable while the APs change channels and power levels. After the new measurements have been accumulated, the WLAN reverts to its previous state and resumes normal operation. Radio manager 10 consolidates the new measurements into its radio environment database and alerts the WLAN administrator of any anomalies.

Radio manager 10 alerts WNM 14 whenever it detects a new AP's beacon during normal operation. At the administrator's command, WNM instructs radio manager 10 to ask all new APs to scan the radio spectrum and report their results. Meanwhile, existing APs and clients detect the new APs' beacons. The combination of measurements from the new APs, existing APs and clients provide the information to reconfigure the WLAN to best incorporate the new APs. If desired, the WLAN administrator may perform another client walkabout in the vicinity of the new APs.

During normal operation, APs and clients measure the 802.11 traffic load at their location on the serving channel. The traffic load at the AP is best managed by dynamic load balancing. High traffic loads at client locations may indicate inter-BSS contention, which can be remedied by an improved radio configuration. If a client reports a load that is much higher than its serving AP, it may indicate contention from stations (also referred to herein as STAs) in a neighboring BSS. In response to this condition, radio manager 10 schedules measurements to capture frames from the neighboring clients and/or AP to identify the BSS and the number of clients responsible for the contention. This information is used to serve two purposes. First, radio manager 10 consolidates and sends it to WNM 14 to use for performance visualization. Second, the information may prompt WNM 14 to ask radio manager 10 to suggest a new radio configuration that incorporates the new information and achieves better overall performance, possibly by reducing the transmit power in one BSS or by reassigning channels.

During normal operation, APs and clients, referred to herein collectively as stations (STAs) measure the non-802.11 interference strength at their locations on the serving channel. In addition, clients measure received interference strength on alternative channels. When radio manager 10 receives reports that indicate non-802.11 interference, it correlates the measurements to locate the interferer, if possible, and alerts WNM 14. The response by WNM 14 depends on the number of reporting STAs, severity and duration of the interference. If a small number of clients report moderate interference, WNM 14 may simply inform the clients of their situation. If the interference is persistent, pervasive and severe, WNM 14 may ask radio manager 10 to suggest a new radio configuration to avoid the interferer.

During normal operation, each client may detect a condition where another client is hidden from it. The WLAN administrator uses the WNM interface to specify when and how to act on this information. These instructions are sent by radio manager 10 to each AP. Clients may be instructed to periodically report hidden stations so that APs may take corrective action by lowering the ready to send (RTS) thresholds of the hidden clients. As a result, the serving AP clears the channel by issuing a clear to send (CTS) notification before either of the clients transmits data, which alleviates the hidden node problem.

Radio manager 10 gains knowledge of the WLAN radio environment through measurement reports obtained from APs and clients. An embodiment of the present invention introduces five types of radio measurement reports: Beacon Reports, Frame Reports CCA Reports, received power indicator (RPI) Histograms, and Hidden Node Reports, each of which indicates a particular RF characteristic or reports a particular RF event.

Beacon and Frame Reports identify sources of 802.11 contention. CCA Reports and RPI Histogram Reports characterize the degree of contention and interference. Hidden Node Reports identify stations colliding within the same BSS.

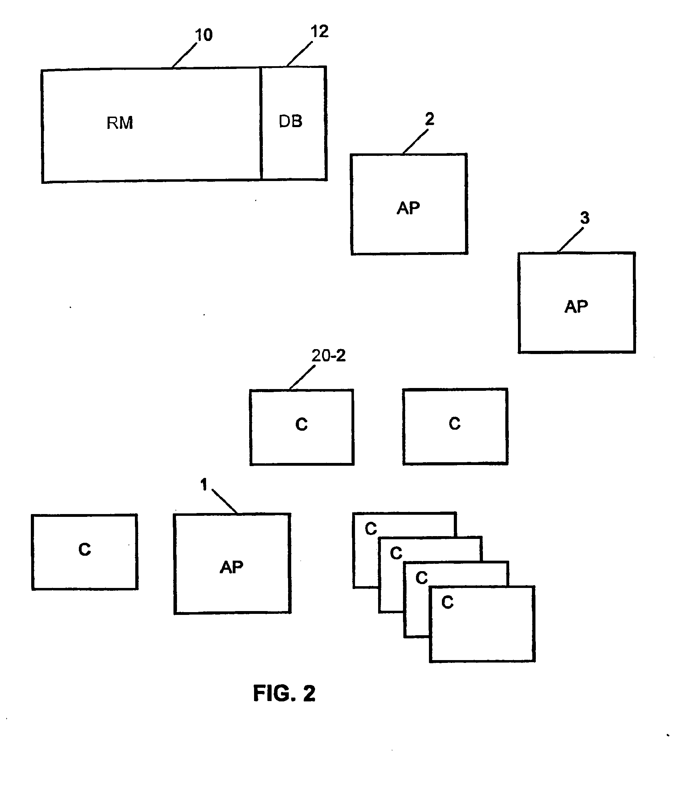

FIG. 2 illustrates the radio measurements introduced by embodiments of the present invention. As shown, the measuring client and one other client are associated with AP 1, but neither client detects the other's signal. AP 2 is close enough to be detected by the measuring client. AP 3 is out of range, but the measuring client does detect some of its associated clients.

Measuring client 20-2 issues a Beacon Report identifying AP 2 as a source of 802.11 contention. Client 20-2 issues a Frame Report indicating contention from a client in another BSS, and identifies AP 3 as the BSS access point Measuring client 20-2 reports significant contention due to clients in another BSS. After receiving this report, radio manager 10 may request a Frame Report, which would identify AP 3 as the destination of the contenting frames. Measuring client 20-2 issues a RPI Histogram Report indicating intermittent, non-802.11 interference and describing the statistics of its received strength. Measuring client 20-2 issues a Hidden Node Report identifying another client in its BSS that appears to be hidden from it.

CCA and RPI Histogram Reports must achieve statistical significance and are therefore utilize measurements having longer durations (e.g., 60 seconds). Beacon, Frame and Hidden Node Reports capture and summarize 802.11 frames to identify specific signal sources. Beacon Reports utilize measurements having shorter durations (e.g., 1 second or less). Frame and Hidden Node Reports typically filter out most of the STA's received traffic and report on a small subset. These reports utilize measurements having medium to longer durations.

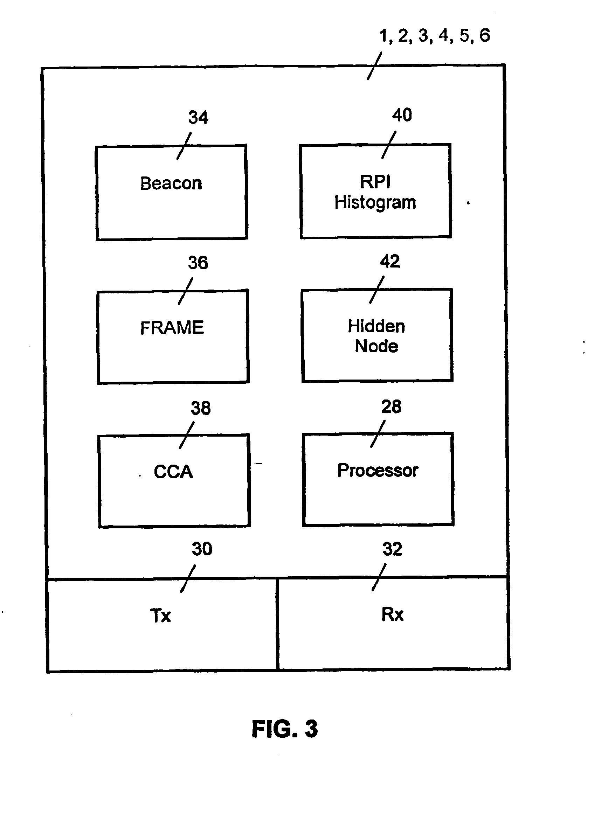

FIG. 3 illustrates an AP in accordance with embodiments of the present invention. In the preferred embodiment, AP 1,2,3,4,5,6 includes processor 28 that executes software modules 34, 36, 38, 40, and 42 for operatively controlling transmitter 30 and receiver 32 to perform the radio measurements of the present invention. Those skilled in the art will know that these software modules can also be implemented as firmware or circuitry as desired in various embodiments.

Beacon measurement module 34 performs measurements to obtain received signal strength, identity and other information of neighbor AP beacon or probe response, and generates a message containing this information. AP 1,2,3,4,5,6 send beacon signals to identify themselves to neighboring devices. During walkabout and AP discovery, beacon measurement module 34 measures radio connectivity of APs and characterize potential BSS downlink coverage. During normal operation, beacon measurement module 34 monitors known APs, detects new APs, and roughly locates clients. Frame measurement module 36 obtains signal strength of neighboring STAs and identity of their respective BSS and generates a message containing this information. During walkabout and AP discovery, frame measurement module 36 identifies uncontrolled STAs to be avoided in the radio configuration. During normal operation, frame measurement module 36 identifies contending neighbor STAs (controlled or not). Clear channel assessment (CCA) measurement module 38 measures the fraction of time that an STA observes a channel busy with 802.11 traffic and generates a message containing this information. During walkabout and AP discovery, CCA module 38 finds channels already busy with 802.11 traffic to avoid in radio configuration. During normal operation, CCA measurement module 38 characterizes 802.11 contention at reporting STA's locations. RPI Histogram measurement module 40 measures received strength and statistics of non-802.11 energy and generates a message containing this information. During walkabout and AP discovery, RPI Histogram measurement module 40 find channels with non-802.11 RF energy to avoid in radio configuration, if possible. During normal operation, RPI Histogram measurement module 40 monitors STAs for new non-802.11 RF energy and alarm, if appropriate. Hidden Node measurement module 42 is not used in walkabouts or AP discovery, but during normal operation improves AP performance by enabling dynamic hidden station control. The messages generated by modules 34, 36, 38, 40, 42 can be transmitted by transmitter 30 to radio manager 10, stored in database 12 and passed to WNM 14.

Radio manager 10 may request a STA to measure on its serving channel or on another channel. When measuring on the serving channel, the STA continues its normal traffic processing while concurrently accumulating the measurement. When measuring on a non-serving channel, the STA must postpone normal traffic and dedicate itself to the measurement since it cannot operate on two channels simultaneously.

During AP Radio discovery, radio manager 10 typically requests APs to scan multiple channels and then assigns one channel and requests beacon reports on that channel. During client walkabout, radio manager 10 requests the walkabout clients to measure on the serving channel and on non-serving channels. During normal operation, radio manager 10 requests APs to measure on their serving channels and clients to measure on serving and non-serving channels.

Radio manager 10 may request Beacon Reports on a serving or non-serving channel. Beacon Reports ask the measuring STA to report both beacons and probe responses. The Beacon Report may be requested of any STA, and typically contains information such as received signal strength, transmitting station address, computed TSF offset between detected BSS and serving BSS, beacon interval, capability information, SSID and supported rates.

The purpose of the Beacon Report is to discover and monitor the presence of neighboring APs, regardless of whether they are controlled by radio manager 10. This helps radio manager 10 characterize the overlap of cochannel BSSs and the redundancy of other-channel BSSs on the downlink. The Beacon Report is used during AP Radio discovery, Client walkabout and normal operation. The transmitting station address identifies the neighbor AP to radio manager 10. In an embodiment, the computed TSF offset allows the serving AP to schedule brief measurements of signal strength from the particular neighbor AP. The signal strength helps radio manager 10 assess the overlap of cochannel BSSs and the coverage redundancy of other-channel BSSs. If two cochannel BSSs contain power-save clients, in an embodiment, the computed TSF offset is used to instruct each AP to schedule its multicast traffic in a manner that is less likely to collide with its neighbor's traffic.

Radio manager 10 may request Frame Reports on a serving or non-serving channel. Frame Reports may be requested of any STA. The Frame Report summarizes each 802.11 frame received from a STA in another BSS, and includes information such as received signal strength, transmitting station address, receiving station address, and frame type and length. The purpose of the Frame Report is to identify STAs that belong to another BSS but are located within radio range of the measuring STA. It also identifies the BSS to which the contending STAs belong. This report helps characterize and monitor the region of uplink RF influence of each neighboring BSS. This includes BSSs controlled by radio manager 10 and BSSs that are not under its control.

Radio manager 10 may request CCA Reports on a serving or non-serving channel. It is typically scheduled to run concurrently with normal traffic processing on the serving channel or in parallel with other dedicated measurements on a non-serving channel. This report may be requested of any STA. The report contains the CCA Busy Fraction. The CCA Busy Fraction measures the accumulated duration of all packets divided by the measurement interval length. This value includes successful packets and erroneous packets. The value range is 0-255, where 0 represents no traffic and 255 represents traffic occurring 100% of the time.

Radio manager 10 may request Received Power Indicator (RPI) Histogram Reports on a serving or non-serving channel. The RPI Histogram Report conveys the relative fraction of time during which RF energy from non-802.11-decodable sources falls into each of eight different received power ranges. The RPI Histogram report provides a measurement of RF energy due to a combination of background noise and background signals, including non-802.11 devices and 802.11 devices whose signals cannot be properly decoded. The histogram helps radio manager 10 assess the non-802.11-decodable RF energy contending with the WLAN at different locations. This information helps radio manager 10 to decide the best channel for each BSS in the vicinity of the measuring STA.

Radio manager 10 may request a Hidden Node Report from clients as a concurrent measurement on the serving channel. The Hidden Node Report includes the received signal strength and destination address of 802.11 frames sent by the serving AP for which the measuring client detected no acknowledgement. The purpose of the Hidden Node Report is to discover and monitor clients within the same BSS that are hidden from each other. This report helps radio manager 10 decide the best transmit power for each BSS and the appropriate RTS threshold for the hidden nodes, if it has a means of setting these thresholds at the clients.

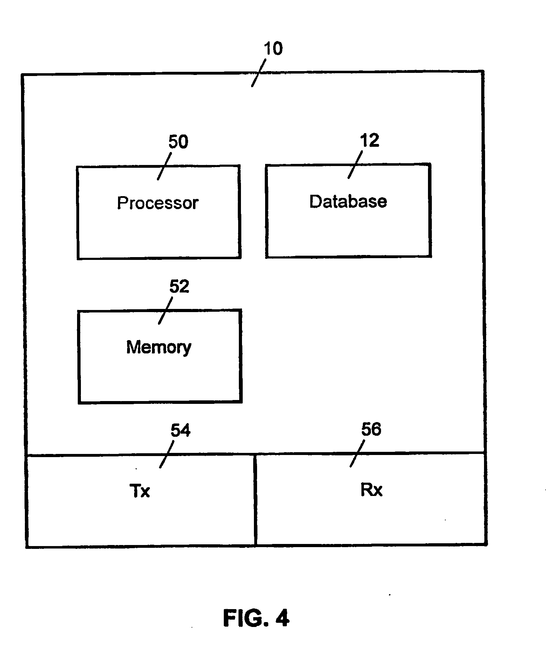

FIG. 4 illustrates the functional components of radio manager 10. Besides database 12, described above, radio manager 10 also includes processor 50, memory 52, transmitter 54 and receiver 56. Transmitter 54 communicates the requests described above to APs and clients, as well as radio configuration information to WNM 14. Receiver 56 receives the report information described above from the APS and clients, as well as instructions from WNM 14.

White a method, computer program product, and apparatus for managing a radio environment without location information have been described and illustrated in detail, it is to be understood that many modifications can be made to various embodiments of the present invention.

## Claims

1. A method for detecting the presence of an unauthorized device in a wireless local area network, the method comprising:
detecting the presence of neighboring devices from which management frames can be sent;
**characterised by**:
receiving a first signal strength indication of a first neighboring device (AP1) from a second neighboring device (AP2);
saving the first signal strength indication of the first neighboring device in a signal strength database (12);
receiving a plurality of management frames purporting to be from the first neighboring device, wherein a first management frame is received from the second neighboring device (AP2) and includes a first signal value and a device identifier;
matching the device identifier from the first management frame with the second neighboring device (AP2) stored in the signal strength database (12);
comparing the first signal value from the first management frame, which purports to be from the first neighboring device (AP1), with the first signal strength indication of the first neighboring device saved in the signal strength database (12) ; and
indicating the presence of an unauthorized device if a difference between the first signal strength indication and the first signal value is greater than a first threshold amount.

2. The method of claim 1, wherein the neighboring devices comprise access points.

3. The method of claim 1, wherein the neighboring devices comprise stations.

4. The method of claim 1, wherein detecting comprises performing radio discovery to determine individual signal strengths of the neighboring devices.

5. The method of claim 1, wherein detecting the presence of neighboring devices comprises manually configuring a device that manages the neighboring devices with location information for each neighboring device.

6. The method of claim 1, wherein a walkabout is performed to determine the locations of the neighboring devices.

7. The method of claim 1, further comprising storing information describing the physical location of the first neighboring device.

8. The method of claim 1, wherein at least one of the neighboring devices detects and validates radio traffic.

9. The method of claim 8, wherein validation is performed by detecting a key within a received management frame, the key being unique to one of the neighboring devices.

10. The method of claim 8, wherein validation is performed by detecting a message integrity check within a received management frame.

11. The method of claim 8, wherein the detecting neighboring device maintains location information for its neighboring devices and performs validation by determining if a management frame could be received from the device indicated as the source of the management frame.

12. A wireless local area network managing device, comprising:
means for detecting the presence of neighboring devices from which management frames can be sent;
**characterised by**:
means (56) for receiving a first signal strength indication of a first neighboring device from a second neighboring device, wherein the first neighboring device is at a first location;
means for saving the first signal strength indication of the first neighboring device in a signal strength database (12);
means (56) for receiving a plurality of management frames purporting to be from the first neighbouring device, wherein a first management frame is received from the second neighboring device and includes a first signal value and a device identifier, wherein the first management frame is transmitted from a second location different to the first location;
means (50) for matching the device identifier from the first management frame with the second neighboring device stored in the signal strength database (12);
means (50) for comparing the first signal value from the first management frame, which purports to be from the first neighboring device, with the first signal strength indication of the first neighboring device saved in the signal strength database (12) and
means for indicating the presence of an unauthorized device if a difference between the first signal strength indication and the first signal value is greater than a first threshold amount.

13. The wireless local area network managing device of claim 12, wherein neighboring devices comprise access points.

14. The wireless local area network managing device of claim 12, wherein neighboring devices comprise stations.

## Patentansprüche

1. Verfahren zum Ermitteln des Vorhandenseins einer unbefugten Vorrichtung in einem drahtlosen lokalen Netzwerk, wobei das Verfahren umfasst:
Ermitteln des Vorhandenseins benachbarter Vorrichtungen, von denen Verwaltungsframes gesendet werden können;
**gekennzeichnet durch**:
Empfangen einer ersten Signalstärkeangabe einer ersten benachbarten Vorrichtung (AP1) von einer zweiten benachbarten Vorrichtung (AP2);
Speichern der ersten Signalstärkeangabe der ersten benachbarten Vorrichtung in einer Signalstärkedatenbank (12);
Empfangen einer Vielzahl von Verwaltungsframes, die vorgeblich von der ersten benachbarten Vorrichtung kommen, wobei ein erster Verwaltungsframe von der zweiten benachbarten Vorrichtung (AP2) empfangen wird und einen ersten Signalwert und einen Vorrichtungsidentifizierer enthält;
Abgleichen des Vorrichtungsidentifizierers von dem ersten Verwaltungsframe mit der zweiten benachbarten Vorrichtung (AP2), die in der Signalstärkedatenbank (12) gespeichert ist;
Vergleichen des ersten Signalwerts von dem ersten Verwaltungsframe, der vorgeblich von der ersten benachbarten Vorrichtung (AP1) ist, mit der ersten Signalstärkeangabe der ersten benachbarten Vorrichtung, die in der Signalstärkedatenbank (12) gespeichert ist; und
Angeben des Vorhandenseins einer unbefugten Vorrichtung, wenn die Differenz zwischen der ersten Signalstärkeangabe und dem ersten Signalwert größer ist, als ein erster Schwellenwert.

2. Verfahren nach Anspruch 1, wobei die benachbarten Vorrichtungen Zugangspunkte aufweisen.

3. Verfahren nach Anspruch 1, wobei die benachbarten Vorrichtungen Stationen aufweisen.

4. Verfahren nach Anspruch 1, wobei das Ermitteln das Durchführen von Funkermittlung umfasst, um individuelle Signalstärken der benachbarten Vorrichtungen zu bestimmen.

5. Verfahren nach Anspruch 1, wobei das Ermitteln des Vorhandenseins benachbarter Vorrichtungen das manuelle Konfigurieren einer Vorrichtung, die die benachbarten Vorrichtungen verwaltet, mit Standortinformationen für jede benachbarte Vorrichtung umfasst.

6. Verfahren nach Anspruch 1, wobei ein Rundgang durchgeführt wird, um die Standorte der benachbarten Vorrichtungen zu bestimmen.

7. Verfahren nach Anspruch 1, das des Weiteren das Speichern von Informationen umfasst, die den physikalischen Standort der ersten benachbarten Vorrichtung beschreiben.

8. Verfahren nach Anspruch 1, wobei wenigstens eine der benachbarten Vorrichtungen Funkverkehr ermittelt und validiert.

9. Verfahren nach Anspruch 8, wobei die Validierung durch Ermitteln eines Schlüssels in einem empfangenen Verwaltungsframe durchgeführt wird, wobei der Schlüssel für eine der benachbarten Vorrichtungen eindeutig ist.

10. Verfahren nach Anspruch 8, wobei die Validierung durch Ermitteln einer Nachrichtenintegritätsprüfung in einem empfangenen Verwaltungsframe durchgeführt wird.

11. Verfahren nach Anspruch 8, wobei die ermittelnde benachbarte Vorrichtung Standortinformationen für ihre benachbarten Vorrichtungen speichert und Validierung durchführt durch Ermitteln, ob ein Verwaltungsframe von der Vorrichtung empfangen werden konnte, die als Quelle des Verwaltungsframes angegeben ist.

12. Verwaltungsvorrichtung für ein drahtloses lokales Netzwerk, mit:
einer Einrichtung zum Ermitteln des Vorhandenseins benachbarter Vorrichtungen, von denen Verwaltungsframes gesendet werden können;
**gekennzeichnet durch**:
eine Einrichtung (56) zum Empfangen einer ersten Signalstärkeangabe einer ersten benachbarten Vorrichtung von einer zweiten benachbarten Vorrichtung wobei sich die erste benachbarte Vorrichtung an einem ersten Standort befindet;
eine Einrichtung zum Speichern der ersten Signalstärkeangabe der ersten benachbarten Vorrichtung in einer Signalstärkedatenbank (12);
eine Einrichtung (56) zum Empfangen einer Vielzahl von Verwaltungsframes, die vorgeblich von der ersten benachbarten Vorrichtung sind, wobei ein erster Verwaltungsframe von der zweiten benachbarten Vorrichtung empfangen wird und einen ersten Signalwert und einen Vorrichtungsidentifizierer enthält, wobei der erste Verwaltungsframe von einem zweiten Standort gesendet wird, der sich von dem ersten Standort unterscheidet;
eine Einrichtung (50) zum Abgleichen des Vorrichtungsidentifizierers von dem ersten Verwaltungsframe mit der zweiten benachbarten Vorrichtung, die in der Signalstärkedatenbank (12) gespeichert ist;
eine Einrichtung (50) zum Vergleichen des ersten Signalwerts von dem ersten Verwaltungsframe, der vorgeblich von der ersten benachbarten Vorrichtung ist, mit der ersten Signalstärkeangabe der ersten benachbarten Vorrichtung, die in der Signalstärkedatenbank (12) gespeichert ist; und
eine Einrichtung zum Angeben des Vorhandenseins einer unbefugten Vorrichtung, wenn die Differenz zwischen der ersten Signalstärkeangabe und dem ersten Signalwert größer ist, als ein erster Schwellenwert.

13. Verwaltungsvorrichtung für ein drahtloses lokales Netzwerk nach Anspruch 12, wobei die benachbarten Vorrichtungen Zugangspunkte aufweisen.

14. Verwaltungsvorrichtung für ein drahtloses lokales Netzwerk nach Anspruch 12, wobei die benachbarten Vorrichtungen Stationen aufweisen.

## Revendications

1. Procédé de détection de la présence d'un périphérique non autorisé dans un réseau local sans fil, le procédé comprenant :
la détection de la présence de périphériques voisins à partir desquels des trames de gestion peuvent être envoyées ;
**caractérisé par** :
la réception d'une première indication de la puissance du signal d'un premier périphérique voisin (AP1) émanant d'un second périphérique voisin (AP2) ;
la sauvegarde de la première indication de la puissance du signal du premier périphérique voisin dans une base de données des puissances de signaux (12) ;
la réception d'une pluralité de trames de gestion censées provenir du premier périphérique voisin, une première trame de gestion étant reçue du second périphérique voisin (AP2) et comprenant une première valeur de signal et un identifiant de périphérique ;
l'association de l'identifiant de périphérique provenant de la première trame de gestion au second périphérique voisin (AP2) stocké dans la base de données des puissances de signaux (12) ;
la comparaison de la première valeur de signal provenant de la première trame de gestion, qui est censée provenir du premier périphérique voisin (AP1), avec la première indication de la puissance du signal du premier périphérique voisin stockée dans la base de données des puissances de signaux (12) ; et
l'indication de la présence d'un dispositif non autorisé si la différence entre la première indication de la puissance du signal et la première valeur du signal est supérieure à une première quantité seuil.

2. Procédé selon la revendication 1, dans lequel les périphériques voisins comprennent des points d'accès.

3. Procédé selon la revendication 1, dans lequel les périphériques voisins comprennent des stations.

4. Procédé selon la revendication 1, dans lequel la détection consiste à procéder à une découverte radio pour déterminer les puissances individuelles des signaux des périphériques voisins.

5. Procédé selon la revendication 1, dans lequel la détection de la présence de périphériques voisins consiste à configurer manuellement un périphérique qui gère les périphériques voisins avec des informations concernant l'emplacement de chaque périphérique voisin.

6. Procédé selon la revendication 1, dans lequel une visite est effectuée pour déterminer les emplacements des périphériques voisins.

7. Procédé selon la revendication 1, consistant en outre à stocker des informations décrivant l'emplacement physique du premier périphérique voisin.

8. Procédé selon la revendication 1, dans lequel au moins un des périphériques voisins détecte et valide le trafic radio.

9. Procédé selon la revendication 8, dans lequel la validation est effectuée par détection d'une clé dans une trame de gestion reçue, la clé étant propre à l'un des périphériques voisins.

10. Procédé selon la revendication 8, dans lequel la validation est effectuée par détection d'un contrôle d'intégrité de message dans une trame de gestion reçue.

11. Procédé selon la revendication 8, dans lequel le périphérique voisin détecteur gère des informations d'emplacement pour ses périphériques voisins et effectue une validation en déterminant si une trame de gestion peut être reçue du périphérique indiqué comme étant la source de la trame de gestion.

12. Périphérique de gestion d'un réseau local sans fil, comprenant :
des moyens permettant de détecter la présence de périphériques voisins à partir desquels des trames de gestion peuvent être envoyées ;
**caractérisé en ce qu'**il comprend :
des moyens (56) permettant de recevoir une première indication de la puissance du signal d'un premier périphérique voisin émanant d'un second périphérique voisin, le premier périphérique voisin se trouvant en un premier emplacement ;
des moyens permettant de sauvegarder la première indication de la puissance du signal du premier périphérique voisin dans une base de données des puissances de signaux (12) ;
des moyens (56) permettant de recevoir une pluralité de trames de gestion censées provenir du premier périphérique voisin, une première trame de gestion étant reçue du second périphérique voisin et comprenant une première valeur de signal et un identifiant de périphérique, la première trame de gestion étant transmise à partir d'un deuxième emplacement différent du premier emplacement ;
des moyens (50) permettant d'associer l'identifiant de périphérique provenant de la première trame de gestion au second périphérique voisin stocké dans la base de données des puissances de signaux (12) ;
des moyens (50) permettant de comparer la première valeur de signal provenant de la première trame de gestion, qui est censée provenir du premier périphérique voisin, avec la première indication de la puissance du signal du premier périphérique voisin stockée dans la base de données des puissances de signaux (12) ; et
des moyens permettant d'indiquer la présence d'un dispositif non autorisé si la différence entre la première indication de la puissance du signal et la première valeur du signal est supérieure à une première quantité seuil.

13. Périphérique de gestion d'un réseau local sans fil selon la revendication 12, dans lequel les périphériques voisins comprennent des points d'accès.

14. Périphérique de gestion d'un réseau local sans fil selon la revendication 12, dans lequel les périphériques voisins comprennent des stations.
